# EUROPÄISCHE PATENTANMELDUNG

(11) **EP 1 800 821 A1**
(43) Veröffentlichungstag der Anmeldung: **27.06.2007**
(21) Anmeldenummer: 06026032.0
(22) Anmeldetag: 15.12.2006
(51) Int. Cl.: B29B 17/00, B29B 9/04, B29C 39/16, B29C 43/48

(54) **Verfahren und Vorrichtung zum Zerkleinern von kunststoffhaltigem Schüttgut**

(30) Priorität: 23.12.2005 DE 10562434
(71) Anmelder: Kalpers, Olivier, 6700 Arlon (BE)
(72) Erfinder:
(74) Vertreter: Bauer, Dirk

(57) **Zusammenfassung**

Bei einem Verfahren und einer Vorrichtung zum Zerkleinem von kunststoffhaltigem Schüttgut dessen Korn hoch flexibel und dessen lockere Schüttung hoch kompressibel ist und das zunächst in einer groben Körnung vorfiegt, anschließend erwärmt und komprimiert und danach in eine feinere Körnung überführt wird, enthält das Schüttgut zumindest zum Teil thermoplastischen Kunststoff. Vor und/oder während und/oder nach der Komprimierung wird das Schüttgut derart zumindest angeschmolzen, dass es nach der Komprimierung und Erwärmung in Form eines endlosen Strangs oder einer Platte vorliegt, der bzw. die abgekühlt und in einem in sich zusammenhängenden Zustand mittels eines Schneidwerkzeugs in die feinere Körnung überführt wird, wobei die Dicke des Strangs bzw. der Platte zwischen 5,0 mm und 100 mm vorzugsweise zwischen 10 mm und 50 mm beträgt, wobei das Schüttgut in der feineren Körnung eine Komgröße im Bereich von 0,0 mm bis 20 mm vorzugsweise von 0,0 mm bis 5,0 mm, weiter vorzugsweise von 0,0 mm bis 2,0 mm aufweist.

## Beschreibung

Die Erfindung betrifft ein Verfahren zum Zerkleinem von kunststoffhaltigem Schüttgut, dessen Korn hoch flexibel und dessen lockere Schüttung hoch kompressibel ist und das zunächst in einer groben Körnung vorliegt, anschließend erwärmt und komprimiert und danach in eine feinere Körnung überführt wird.

Des Weiteren betrifft die Erfindung eine Vorrichtung zum Durchführen des vorstehend beschriebenen Verfahrens.

Ein derartiges Verfahren ist beispielsweise aus der DE 199 16 543 A1 bekannt. Das bekannte Verfahren dient zur Wiederaufbereitung von nicht vulkanisierten Polyurethan-Elastomer-erzeugnissen, die nicht thermoplastisch, kompakt oder mikrozellular aufgebaut sind. Es handelt sich dabei beispielsweise um Abfallmaterialien in Form von Anschlussteilen oder anderen Bauteilen. Da Polyurethan als Elastomer sehr elastisch ist, stellt die Zerkleinerung derartiger Abfälle ein schwieriges Problem dar. Nach dem vorbekannten Verfahren werden die Abfälle zunächst in einer Schneidmühle bis zu einer Korngröße von 10 mm bis 15 mm zerkleinert. Das so erzeugt Mahlgut wird für den nächsten Schritt aufgewärmt, und zwar bis zu einer Temperatur von 90° C bis 120° C. Anschließend wird das Mahlgut auf einem Walzwerk bei einer Temperatur von 120° C bis 210° C ausgewalzt. Durch diesen Vorgang werden die mikrozellulären Elastomere entgast, kompaktisiert und teilweise geschmolzen. Die kompakten Elastomere werden teilweise geschmolzen und auch fein zerkleinert. Nach diesem Vorgang werden die Abfälle plastisch, d.h. die Elastizität des elastomeren Polyurethans wird völlig reduziert. Beim Vorgang des Walzens unter Temperatur werden unter den hohen dort herrschenden mechanischen Kräften die Makromoleküle zerstört. Nach dem Walzen werden die Abfälle, die nicht mehr elastisch sind, erneut zu einer Korngröße von 3 mm bis 4 mm zerkleinert. Dieser Vorgang findet nach dem bekannten Verfahren in einer herkömmlichen Schneidmühle statt. Nach diesem Zerkleinerungsschnitt können die so vorliegenden Abfälle auf zwei verschiedene Weisen weiterverarbeitet werden:

Eine erste Variante besteht in einer Compoundierung mit Thermoplasten oder thermoplastischen Elastomeren, die verträglich mit dem Polyurethan sind oder durch Verträglichmacher compoundiert werden können. Nach dem Compoundieren werden diese Mischungen Granuliert. Die so erzeugten Granulate können durch Spritzgussextrusion oder Kalandrieren weiterverarbeitet werden.

Die zweite Variante der Weiterverarbeitung besteht in einem Pressen der zerkleinerten Abfälle. Diese werden in einer hydraulischen Presse unter einer Temperatur von 160° C bis 210° C und 100 bar bis 300 bar in einem Werkzeug gepresst und anschließend unter demselben Druck abgekühlt bis zur Raumtemperatur. Die so erfolgten Produkte können weiter entweder unter einen kompakten oder einer geschäumten Form vorzugsweise in Form einer Platte verwendet werden.

Ziel des bekannten Verfahrens ist die stoffliche Wiederverwertung der Polyurethan-Abfälle. Die Erwärmung, Komprimierung und anschließende Überführung in eine feinere Körnung (im Bezug auf das Ausgangsmaterial) dient lediglich dazu, das Abfallmaterial anschließend über eine Compoundierung oder Pressung wieder spritzgießtechnisch, extrusionstechnisch oder durch Kalandrierung bzw. durch erneutes Pressen in einen Recyclingwerkstoff umzuformen. Problematisch ist bei derartigen Recyclingmaterialien jedoch die Einhaltung bestimmter Standards hinsichtlich der Materialeigenschaften, da in der Regel die Zusammensetzung der als Ausgangsstoff genutzten Polyurethan-Abfallmaterialien in aller Regel nicht genau bekannt ist.

Des Weiteren wird in der US 6,082,642 eine Vorrichtung zur Pulverisierung eines Schüttguts, bestehend aus Gummi- oder Teppichabfällen, offenbart. Innerhalb einer massiv ausgebildeten Zylinder-Kolben-Einheit wird das Abfallgut in der gröberen Körnung auf rein mechanische Weise sehr stark komprimiert. Vor einem Austrittsquerschnitt an der Vorderseite des Zylinders befindet sich ein schnell rotierendes Schneidwerkzeug mit einer Vielzahl von Zähnen. Da der Austrittsquerschnitt sehr klein gewählt ist und die Kante der Austrittsöffnung in der Stirnseite des Zylinders als Gegenschneide wirkt, lässt sich eine sehr feine Körnung nach Art eines Pulvers erzeugen. Dieses Pulvermaterial soll, insbesondere falls es sich hierbei um Gummi handelt, wieder dem Produktionsprozess zugeführt werden und wegen der befürchteten Schadstoffentwicklung nicht zu Verbrennungszwecken genutzt werden. Problematisch bei diesen vorbekannten Verfahren ist insbesondere der diskontinuierliche Prozess bei der Verdichtung, der lediglich vergleichsweise geringe Massenströme zulässt, wenn die Vorrichtung nicht eine unvorteilhaft große Dimension annehmen und dadurch auch hohe Investitionskosten verursachen soll.

Aus der DE 102 34 763 A1 sind ein Verfahren und eine Vorrichtung zum Zerkleinern von Schüttgut, insbesondere in Form gesammelter Folienabfälle und besonders z. B. Einkaufstüten, Stücke von Blisterverpackungen oder großformatige Luftpoisterungen, bekannt. Bei dem vorbekannten Verfahren findet auf rein mechanischem Wege eine Verdichtung des zunächst in grober Körnung vorliegenden Schüttguts statt, das - ohne eine Erwärmung, insbesondere ohne ein Anschmelzen - rein mechanisch verdichtet wird und in diesem Verdichteten Zustand durch Schneiden mit Hilfe eines rotierenden Raspelwerkzeugs in die feinere Körnung überführt wird. Die Korngröße bei diesem Verfahren beträgt etwa 0,1 mm bis hin zu mehreren mm. Da die Korngrößenstreuung bei dem Verfahren gering ist, eignet sich dieses vorbekannte Verfahren insbesondere zur Herstellung eines feinkörnigen Kunststoffmaterials, das als Sekundärbrennstoff bei der industriellen Verbrennung Verwendung findet und angesichts stetig steigender Energiekosten als preiswerter Brennstoff zunehmend interessant wird. Für die Güte eines derartigen Sekundärbrennstoffs ist insbesondere die geringe Streuung der Korngröße wichtig und zum anderen aber auch eine absolut gesehen möglichst kleine Korngröße, um ein sehr großes Oberflächen-VolumenVerhältnis zu erzeugen. Dies ist angesichts der in den Kunststoffen vorhandenen langkettigen Kohlenwasserstoffmalekülen wichtig für eine vollständige Verbrennung derselben ohne nennenswerte Schadstoff- und Rußentwicklung.

Ein gewisses Problem der vorbekannten Verfahrensweise besteht darin, dass die rein mechanische Verdichtung und das Schneiden in diesem Zustand einen recht hohen Energieaufwand sowie einen baulichen Aufwand erfordert. Der Druck mit dem das in der groben Form vorliegende Schüttgut komprimiert und während des Schneidvorgangs gehalten wird, muss sehr hoch sein, um während des Schneidvorgangs zu verhindern, dass die auf die groben Körner einwirkenden Schneidkräfte zu einer Verlagerung desselben führen. In einem solchen Fall kann eine gleich bleibende Korngröße des erzeugten Materials nicht sichergestellt werden, was einen Qualitätsverlust hinsichtlich der Brenneigenschaften bedeutet.

Aus der DE 41 28 046 A1 sind ein Verfahren und eine Vorrichtung zur Umwandlung von Schaumstoffteilen in wieder verwertbares Kunststoffmaterial bekannt. Bei den Schaumstoffteilen kann es sich beispielsweise um Polistyrol oder andere Schaumstoffe, die insbesondere als Verpackungsmaterialien Verwendung finden, handeln. Dabei wird in einem Zylinder mit einer Schnecke grob zerkleinertes Kunststoffmaterial gemahlen und unter Einwirkung von Hitze und Druck in eine vliesfähige Kunststoffmasse umgewandelt, die durch Auslassdüsen zu einem Kunststoffstrang gepresst wird. Mittels eines Messerbalkens wird anschließend der Kunststoffstrang in Granulat zerkleinert. Die gesamte Vorrichtung ist für einen Einsatz, beispielsweise in einem Elektroeinzelhandelsgeschäft vorgesehen und besitzt eine Gesamtlänge von lediglich ca. 60 cm. Mit der bekannten Einrichtung für Schaumstoffmaterialien lassen sich jedoch nicht Abfälle entsorgen, die große Anteile thermoplastischen Materials, wie beispielsweise Folienstücke bzw. Kunststoffverpackungen enthalten. Auch lassen sich mit den umlaufenden Messerbalken nicht hinreichend kleine Partikel erzeugen. Die erreichbare Korngröße mag zwar für Granulat, das anschließend bei der Wiederverwertung eingeschmolzen wird ausreichen, ist jedoch unbefriedigend bei einer Weiterverwertung der erhaltenen Partikel als einzublasender Brennstoff.

### Aufgabe

Der Erfindung liegt die Aufgabe zugrunde, ein Verfahren und eine Vorrichtung zum Zerkleinern von Schüttgut bereitzustellen, die bei möglichst geringem apparativen Aufwand eine Zerkleinerung des Schüttguts auf eine möglichst kleine Korngröße mit möglichst geringer Streuung der Größe ermöglicht.

### Lösung

Ausgehend von einem Verfahren der eingangs beschriebenen Art wird diese Aufgabe erfindungsgemäß dadurch gelöst, dass das Schüttgut, das zumindest zum Teil einen thermoplastischen Kunststoff enthält, vor und/oder während und/oder nach der Komprimierung derart angeschmolzen wird, dass es nach der Komprimierung und Erwärmung in Form eines endlosen Strangs oder einer Platte vorliegt, der bzw. die abgekühlt und in einem in sich zusammenhängenden Zustand mittels eines Schneidwerkzeugs in die feinere Körnung überführt wird, wobei die Dicke des Strangs bzw. der Platte zwischen 5 mm und 100 mm, vorzugsweise zwischen 10 mm und 50 mm beträgt und wobei das Schüttgut in der feineren Körnung eine Korngröße im Bereich von 0,0 mm bis 20 mm, vorzugsweise von 0,0 mm bis 5,0 mm, weiter vorzugsweise zwischen 0,0 mm und 2,0 mm aufweist.

Das erfindungsgemäße Verfahren, das insbesondere der Erzeugung von Sekundärbrennstoffen dient, macht sich die besonderen Eigenschaften der im Schüttgut enthaltenen thermoplastischen Kunststoffe zunutze, um den Prozess der Zerkleinerung zu optimieren. Die Anschmelzung des Schüttguts in der groben Körnung und die Überführung in einen endlosen Strang oder eine Platte dient als Hilfsmittel dazu, ein Zwischenprodukt zu erzeugen, das nach hinreichender Abkühlung, d.h. Aushärtung, optimale Schneideigenschaften aufweist, in dem Sinne, dass die bei der Zerkleinerung erzielbare feinere Körnung eine sehr kleine Korngröße und ein sehr kleines Korngrößenspektrum, d.h. eine geringe Varianz der Korngröße, aufweist.

Es mag zunächst widersinnig erscheinen, zunächst das zuvor in lockerer Schüttung vorliegende Material in Form eines kompakten Strangs bzw. einer kompakten Platte zu bringen, die in einem späteren Schritt wieder mechanisch mit Hilfe eines Schneidwerkzeugs zerkleinert wird. Die auf diese Weise erzielbaren Ergebnisse bei der Produktqualität übertreffen diejenigen bei den Verfahren nach dem Stand der Technik jedoch so deutlich, dass der erforderliche Mehraufwand in jedem Fall gerechtfertigt ist. Im Übrigen ist der für das Erwärmen und anschließende Abkühlen des komprimierten Schüttguts erforderliche Energieaufwand im Ergebnis vergleichsweise gering, wenn im Sinne einer intelligenten Energierückgewinnung die bei der Abkühlung des Strangs bzw. der Platte frei werdende Wärme wieder zur Vorwärmung des zunächst in der groben Körnung vorliegende Schüttguts genutzt wird. Außerdem lässt sich der Energieverlust durch eine entsprechend wirkungsvolle Isolierung der Bereiche, in denen die Erwärmung bzw. auch die Abkühlung stattfindet, minimieren.

Die angegebenen Dicken für den Strang bzw. die Platte sowie die Korngröße des nach dem Schneidvorgang erhaltenen feineren Korns haben sich in der Praxis als besonders vorteilhaft herausgestellt.

Es versteht sich, dass das erfindungsgemäße Verfahren sowohl kontinuierlich als auch diskontinuierlich, d.h. intermittierend unter Bearbeitung jeweils einer bestimmten Chargenmenge, durchgeführt werden kann. Auch eine Kombination einer kontinuierlichen bzw. quasi kontinuierlichen, d.h. intermittierenden, Betriebsweise gewisser Verfahrensschritte (wie beispielsweise der Erwärmung) mit einer diskontinuierlichen Betriebsweise (beispielsweise im Bereich der Komprimierung) ist denkbar.

Als Ausgangsstoff soll insbesondere Schüttgut in Form einer Mischung bereits vorsortierter und mit herkömmlichen Verfahren vorzerkleinerter Abfallstoffe verwendet werden. So kommen beispielsweise Kunststoffabfälle aus Haushalten oder der Industrie, insbesondere Verpackungsabfälle, Folienabfalle, Behälterabfälle o. ä. in Frage, aber auch Teppichabfälle entweder aus der Teppichfabrikation oder gebrauchte und entsorgte Teppiche kommen in Betracht. Zu einem gewissen Umfang können auch elastomere Kunststoffabfälle in dem zu behandelnden Schüttgut enthalten sein, wie beispielsweise Schaumstofifstücke oder Gummistücke. Der Anteil an Schaumstoffen darf jedoch eine Obergrenze von ca. 3,0 % nicht übersteigen. Ein geringer Anteil von Holzwerkstoffen ist gleichfalls tolerabel. Nicht akzeptabel sind jedoch metallische Stoffe, die die Schneidwerkzeuge zu schnell verschleißen würden, sowie halogenierte Kunststoffe, die bei der angedachten Verbrennung des Endproduktes zu einer unerwünschten Schadstoffentwicklung führen würden.

Wesentlich für das Funktionieren des erfindungsgemäßen Verfahrens ist ein hinreichender Gehalt an thermoplastischem Kunststoffmaterial, das im Zuge der Erwärmung des in grober Körnung vorliegenden Materials zumindest bereichsweise bis zu dessen Erweichungspunkt oder sogar Schmelzpunkt gebracht wird, damit die Herstellung eines zusammenhängenden Verbundes des Materials in Form eines Strangs oder einer Platte möglich ist. In diesem Verbund können sodann auch nicht anschmelzbare und/oder nicht plastifizierbare Komponenten, wie beispielsweise Holz oder Elastomerwerkstoffe, wie Gummi oder Silikonmaterialien, enthalten sein. Diese bilden sodann kleinere "Einschlüsse", d.h. "Inseln", in einer im Übrigen aus plastifiziertem Kunststoffmaterial bestehenden Umgebung, Es versteht sich, dass die nicht schmelzbaren und möglicherweise auch nicht komprimierbaren Komponenten des zu behandelnden Schüttguts zumindest in eine Dimension eine kleinere Erstreckung aufweisen, als dies der Dicke des zu pressenden Strangs bzw. der zu pressenden Platte entspricht. Das Verfahren eignet sich daher insbesondere zur Behandlung länglicher bzw. lang gestreckter Stücke des zu verwertenden Schüttguts.

Es versteht sich des Weiteren, dass sinnvollerweise die Temperatur im Bereich der Heizeinrichtung nur so hoch gewählt wird, dass bei der Komprimierung ein hinreichend fester Zusammenhalt des Strangs bzw. der Platte erreicht wird. Falls es aufgrund einer besonderen Zusammensetzung des Ausgangsmaterials nötig ist, kann aber auch ein vollständiges Schmelzen der thermoplastischen Anteile durchgeführt werden, um die gewünschten Eigenschaften des Strangs bzw. der Platte zu erzielen. Bevorzugt wird jedoch insbesondere ein solcher, lediglich durch Anschmelzen hergestellter Verbund, bei dem zum einen noch gewisse Lufteinschlüsse in dem Strang bzw. der Platte vorhanden sind und bei dem zum anderen die einzelnen Körner des Schnittguts (grobe Körnung) quasi miteinander verklebt sind. Dieser Zustand erleichtert gegenüber einer durch durchgängiges Aufschmelzen erzeugten Platte die anschließende Überführung in die feinere Körnung, wobei der Energieaufwand bei der Zerkleinerung durch den nur lockeren Verbund begrenzt wird. Dabei erleichtert der lockere Verbund gegenüber einem bloßen Komprimieren ohne Anschmelzen den Zerkleinerungsvorgang deutlich, weil eine wesentlich bessere Fixierung der gröberen Körner erreicht werden kann.

Eine verfahrenstechnisch bevorzugte Möglichkeit besteht darin, das Schüttgut während der Erwärmung mittels eines Förderbandes zu fördern und mittels einer oberhalb des Förderbandes angeordneten Heizeinrichtung zu erwärmen. Dabei kann der Wärmeübergang von der Heizeinrichtung auf das geförderte Schüttgut sowohl über Wärmestrahlung als auch über Konvektion unter Verwendung eines heißen Gases als auch über Wärmeleitung erfolgen, falls das Schüttgut in Kontakt mit einer erwärmten Oberfläche der Heizeinrichtung oder eines zwischengeschalteten Übertragungselementes ist. Es versteht sich von selbst, dass die drei vorgenannten Arten der Wärmeübertragung nicht nur alternativ, sondern auch kumulativ miteinander angewendet werden können. Zusätzlich zu der Erwärmung von oben ist auch eine Erwärmung durch das Förderband hindurch möglich, da hierbei die Thermik unterstützend in Bezug auf eine gute Verteilung der Wärme innerhalb des eine gewisse Dicke aufweisenden Schüttgutstromes wirkt. Für den Betrieb der Heizeinrichtung können grundsätzlich alle klaren Energiearten (Brennstoffe, wie Öl, Gas, feste Brennstoffe oder elektrische Energie) verwendet werden.

Das Förderband kann entweder aus einem temperaturbeständigen Gummimaterial, vorzugsweise mit Verstärkungseinlagen aus Kunststoff oder Metall, bestehen oder als metallisches Band ausgebildet sein, insbesondere wenn eine Wärmeübertragung von der Unterseite des Bandes her auf dessen Oberseite bzw. das dort geförderte Schüttgut vorgesehen ist.

Gemäß einer Ausgestaltung des erfindungsgemäßen Verfahrens wird vorgeschlagen, dass die Heizzeit, während der das Schüttgut vorzugsweise stillsteht, d.h. nicht in Förderrichtung bewegt wird, mindestens 20 Sekunden vorzugsweise mindestens 30 Sekunden beträgt. Des Weiteren hat es sich als besonders vorteilhaft herausgestellt, wenn die Heiztemperatur zwischen 200° C und 250° C beträgt und dass das Schüttgut während des Erwärmens und/oder bereits zuvor komprimiert wird. Hierdurch wird die Gefahr einer Entflammung bei einer Erhitzung des noch nicht komprimierten Schüttguts verringert, da der Luftgehalt des Schüttguts nach der Komprimierung deutlich reduziert ist.

Des Weiteren ist es möglich, das Schüttgut während der Komprimierung zwischen zwei Förderbändern oder zwei Walzen zu befördern, wobei der Förderquerschnitt sich in Förderrichtung bis auf einen Lieferquerschnitt reduziert, dessen Höhe der Dicke des Strangs oder der Platte entspricht. Im Falle der Komprimierung zwischen zwei Förderbändern kann deren Länge so gewählt werden, dass auf dem Weg zum Lieferquerschnitt über die davor angeordnete Heizeinrichtung gleichzeitig mit der Komprimierung auch eine Erwärmung des Schüttguts zumindest bis zu einem Erweichungspunkt stattfindet.

Eine Weiterbildung des erfindungsgemäßen Verfahrens besteht darin, dass ein kontinuierlich oder diskontinuierlich geförderter Strom des Stückguts vor der Komprimierung angeschmolzen und sodann in einen Komprimierraum überführt und dort mittels eines Pressstempels komprimiert wird. Bei einer derartigen Verfahrensweise kann der geförderte Strom des Stückguts in grober Körnung quasikontinuierlich angeschmolzen werden, um dann in einem nächsten Schritt chargenweise entsprechend des Fassungsvermögens des Komprimierraums mittels des Pressstempels komprimiert zu werden.

Im Hinblick auf eine Optimierung des Verfahrensablaufs ist es von Vorteil, wenn der Strom des Stückguts vor der Überführung in den Komprimierraum in einen Ansammlungsraum überführt und die dort angesammelte Menge des angeschmolzenen Stückguts in den Komprimierraum überführt wird, wobei sich der Ansammlungsraum und der Komprimierraum oberhalb eines weiteren Förderbandes befinden, welches die beiden Räume nach unten hin begrenzt.

Das zweite Förderband, das den Transport vom Ansammlungsraum in den Komprimierraum und des Weiteren den Transport der so erzeugten Platte in Richtung auf die Zerkleinerungsvorrichtung bewerkstelligt, erlaubt bei einer schrittweisen intermittierenden Vorschubbewegung die quasi-kontinuierliche Betriebsweise des ersten Förderbandes, auf dem der Strom des Stückguts angeschmolzen wird. Um bei der Überführung des angeschmolzenen Stroms des Stückguts besondere Hilfseinrichtungen überflüssig zu machen und insbesondere ein Ankleben des angeschmolzenen Schüttguts und die damit einhergehende Gefahr von Störungen zu vermeiden, sollte der Strom des angeschmolzenen Stückguts durch die Schwerkraft von dem ersten Förderband in den Ansammlungsraum überführt werden, wobei die Bewegung des Förderbandes zeitweise unterbrochen wird, um die Überführung des Strom des Stückguts ebenfalls zu unterbrechen.

In vorrichtungstechnischer Hinsicht wird die zugrunde liegende Aufgabe durch eine Vorrichtung zum Zerkleinern von kunststoffhaltigem Schüttgut gelöst, dessen Korn hoch flexibel und dessen lockere Schüttung hoch kompressibel ist und das zunächst in einer groben Körnung vorliegt, wobei die Vorrichtung eine Heizeinrichtung zum Erwärmen des Schüttguts, eine Kamprimierungseinrichtung zum Komprimieren des Schüttguts und eine Zerkleinerungseinrichtung zur Überführung des Schüttguts in eine feinere Körnung aufweist und dadurch gekennzeichnet ist, dass mittels einer Heizeinrichtung das Schüttgut, das zumindest zum Teil thermoplastischen Kunststoff enthält, vor und/oder während und/oder nach der Komprimierung zumindest derart anschmelzbar ist, dass es nach der Komprimierung und Erwärmung in Form eines endlosen Strangs oder einer Platte vorliegt und dass mittels der Komprimierungseinrichtung ein endloser Strang oder eine Platte des Schüttguts erzeugbar ist, wobei die Dicke des Strang bzw. der Platte zwischen 2 mm und 30 mm, vorzugsweise zwischen 5 mm und 15 mm beträgt und der mittels der Zerkleinerungseinrichtung aus dem Strang bzw. der Platte jeweils im abgekühlten Zustand ein Stückgut mit einer feineren Korngröße erzeugbar ist, die zwischen 0,05 mm und 2,5 mm, vorzugsweise zwischen 0,1 mm und 1,0 mm, beträgt.

Wenn eine Wärmeleitung durch eine Fördereinrichtung für das noch nicht angeschmolzene Schüttgut, vorzugsweise durch ein Förderband, hindurch vermieden werden soll, kann das Schüttgut mittels einer Fördereinrichtung unterhalb der Heizeinrichtung hindurch gefördert werden, so dass die wärme von oben auf das Schüttgut einwirkt.

Im Falle einer diskontinuierlichen Komprimierung des angeschmolzenen Schüttguts kann die Komprimierungseinrichtung einen Pressstempel aufweisen, mittels dessen das angeschmolzene Schüttgut in einem Komprimierraum komprimierbar ist, dessen Unterseite vorzugsweise von einem weiteren Förderband gebildet ist und der Seitenwände zur Verhinderung einer seitlichen Ausweichbewegung des zu komprimierenden Schüttguts besitzt.

Um eine übermäßige Länge der beiden hintereinander angeordneten Förderbänder zu vermeiden, können die beiden Förderbänder im rechten Winkel zueinander angeordnet sein.

Außerdem ist erfindungsgemäß noch vorgesehen, dass das weitere Förderband mit oberhalb der Förderoberfläche vorstehenden, in Längsrichtung des Förderbandes äquidistant zueinander verteilt angeordneten Leisten versehen ist, deren lichter Abstand zueinander der Länge einer in dem Komprimierraum pressbaren Platte und deren Höhe der Dicke der pressbaren Platte entspricht, wobei die Seitenwände des Komprimierraums in einem solchen vertikalen Abstand oberhalb der Förderoberfläche des Förderbandes angeordnet sind, der geringfügig größer als die Höhe der Leisten ist. Auf diese Weise wird sowohl eine hermetische Abriegelung des Komprimierraums in Förderrichtung des Förderbandes bzw. die entgegengesetzte Richtung erreicht und zum anderen ein sicherer Abtransport der gepressten Platten erreicht. Zwischen den Leisten und den dazwischen befindlichen gepressten Platten besteht ein Formschluss, der ein Durchrutschen zwischen dem Förderband und den Platten bei deren Transport verhindert.

In weiterer Ausgestaltung der Erfindung wird vorgeschlagen, dass die Zerkleinerungseinrichtung aus einer Mehrzahl von axial aneinander fügbaren ringförmigen Raspelscheiben mit am Umfang vorstehenden Raspelzähnen besteht, wobei jede einzelne Raspelscheibe in Umfangsrichtung aus einer Mehrzahl aneinander gefügter Scheibensegmente besteht, die mit Bohrungen auf in axiale Richtung verlaufende zueinander parallele Haltestangen aufschiebbar sind, welche wiederum zwischen zwei ein Paket der Raspelscheiben an beiden Enden begrenzende Spannscheiben einspannbar sind.

Derartige Raspelscheiben werden von Rocket Sales AG in Baar/Schweiz, unter der Typbezeichnung R 115 REG Turbo, angeboten. Die Raspelscheiben mit derartigen Rauhklingen, die gegeneinander verschränkt sind und aus gehärtetem Stahl bestehen, werden typischerweise zum Anrauhen von Gummireifen vor einer Aufvutkanisierung weiteren Gummimaterials verwendet, beispielsweise bei der Runderneuerung von Reifen, insbesondere in der Luftfahrtindustrie. Erfindungsgemäß hat sich eine ganz hervorragende Wirksamkeit derartiger Raspelscheiben für den anmefdungsgemäßen Zweck der Erzeugung einer sehr kleinen Partikelgröße bei der Herstellung von Sekundärbrennstoffen aus angeschmolzenen und komprimierten Platten- bzw. Strangmaterial.

Ferner ist nach der Erfindung noch vorgesehen, dass dem Schüttgut vor dem Erwärmen auf der Oberseite und/oder der Unterseite des zu bildenden Strangs oder der zu bildenden Platte ein Bahnmaterial, vorzugsweise ein Papier, zuführbar ist, wobei das Bahnmaterial, dessen Breite mindestens der Breite des zu bildenden Strangs entspricht, vor der Zuführung zu dem Strang oder zu der Platte, von einer Rolle abwickelbar und nach der Trennung von dem Strang oder von der Platte auf einer Rolle aufwickelbar ist. Durch das möglicherweise wieder verwendbare Bahnmaterial wird die Problematik des Anhaftens der Platten bzw. des Strangs im Rahmen des Erweichens vermieden.

Außerdem hat es sich als besonders vorteilhaft herausgestellt, wenn die Vorrichtung einen Vorkomprimierraum enthält, in dem das Schüttgut ohne Erwärmung vorkomprimierbar ist und einen sich in Förderrichtung anschließenden Komprimierraum, in dem das Schüttgut erwärmbar und komprimierbar ist und dessen quer zur Förderrichtung gemessene Breite größer als die quer zur Förderrichtung gemessene Breite des Vorkomprimierraums ist.

Ferner wird die erfindungsgemäße Vorrichtung noch dadurch weitergebildet, dass das Bahnmaterial zwischen dem Vorkomprimierraum und dem Komprimierraum dem Strang oder der Platte zuführbar ist, da sich die Problematik des Anklebens erst in Verbindung mit der Erwärmung des Schüttgutes ergibt, d.h. dass im Vorkomprimierraum aufgrund der dort herrschenden niedrigeren Temperaturen noch keine Anhaftgefahr besteht.

Schließlich ist noch vorgesehen, dass der Antrieb der Zerkleinerungseinrichtung, ausgehend von einem Elektromotor, über mindestens einen Riementrieb erfolgt, wodurch eine bessere Schwingungsdämpfung sowie Stoßkraftreduzierung erreicht wird, sowie dass die erhaltenen zerkleinerten Partikel mittels einer Saugvorrichtung über eine Siebanlage abgezogen werden.

Während der Hauptverwendungszweck der zerkleinerten Partikel die Verbrennung insbesondere in großindustriellen Öfen, wie beispielsweise in Zementwerken oder anderen Kraftwerksbetrieben ist, besteht eine weitere Möglichkeit zur stofflichen Verwertung darin, dass aus den durch Zerkleinerung erhaltenen Partikeln durch Anschmelzen und Pressen wiederum ein plattenförmiges oder bandförmiges Produkt erhalten wird. Dieses band- oder plattenförmige Produkt lässt sich beispielsweise als Isoliermaterial oder als Schallschluck bzw. Schallschutzmaterial verwenden. Vorzugsweise enthalten die zuvor durch Zerkleinerung erzeugten und sodann durch Anschmelzen und Pressen wieder zu einem Materialverbund zusammengefügten Partikel einen Anteil an Kunststofffasern, insbesondere in Form von Faserstücken. Derartiges faserhaltiges Partikelmaterial entsteht insbesondere dann, wenn das Ausgangsmaterial vor der Zerkleinerung Partikel von Textilien bzw. Teppichen enthält. In diesem Falle verbleiben auch nach der Zerkleinerung Faserstücke, die in dem anschließend durch An- bzw. Verschmelzen hergestellten platten- oder bandförmigen Verbundmaterial für die nötige Festigkeit - nach Art einer Armierung - sorgen. Typischerweise enthält auch das derartig hergestellte Platten- oder Bandmaterial noch Lufteinschlüsse, so dass sich zum einen die gewünschte gute Isolationswirkung und zum anderen eine gewisse Flexibilität ergibt, die die Anpassung an die Geometrie von zu isolierenden Bauteilen ermöglicht. Die auf diese Weise erzeugten Platten bzw. Materialbahnen zeichnen sich durch eine erstaunliche Zähigkeit bei gleichzeitig hinreichender Flexibilität aus.

Um den vorstehend erläuterten Armierungseffekt zu erzielen, ist es besonders vorteilhaft, wenn die enthaltenen Fasern aus einem Material bestehen, dass einen höheren Schmelzpunkt aufweist, als das Material der übrigen nicht faserförmigen Partikeln, die vorzugsweise aus einem thermoplastischen Material bestehen. In diesem Fall bewirkt das thermoplastische Material den eigentlichen Bindungseffekt, wohingegen die Fasern bei der Verpressung und Erhitzung überhaupt nicht ihren Schmelzpunkt erreicht haben bzw. lediglich äußerlich angeschmolzen und so in den Verbund integriert wurden. Um den heutigen Anforderungen an den Brandschutz gerecht zu werden, ist es empfehlenswert, den zerkleinerten Partikeln vor dem Wiederverpressen und -verschmelzen, die aus dem Stand der Technik bekannten Flammschutzmittel beizufügen, wobei insbesondere auch Tropfverhinderer verwendet werden sollten.

Bei einer besonders bevorzugten Ausführungsform der Erfindung werden die erhaltenen zerkleinerten Partikel ausgesiebt, wobei die die Faseranteile aufweisende gröbere Fraktion zur Erzeugung des plattenförmigen bzw. bandförmigen Materials verwendet wird und die feinere Fraktion, die praktisch keine Faseranteile enthält, als einfach und verklumpungsfrei einzublasender hochwertiger Ersatzbrennstoff Verwendung findet. Auf diese Weise können aus einer Mischung von Ausgangsmaterialien, bei denen sowohl z.B. Teppichpartikel als auch Folienpartikel enthalten sind, zwei Fraktionen eines Endproduktes erzeugt werden, von denen sich einer als hochwertiger Ersatzbrennstoff prädestiniert und der andere zur sehr kostengünstigen Erzeugung von Isolier- und Schallschluckmaterialien eignet.

Die Erfindung wird nachfolgend anhand zweierAusführungsbeispiele, die in der Zeichnung dargestellt sind näher erläutert. Es zeigt:

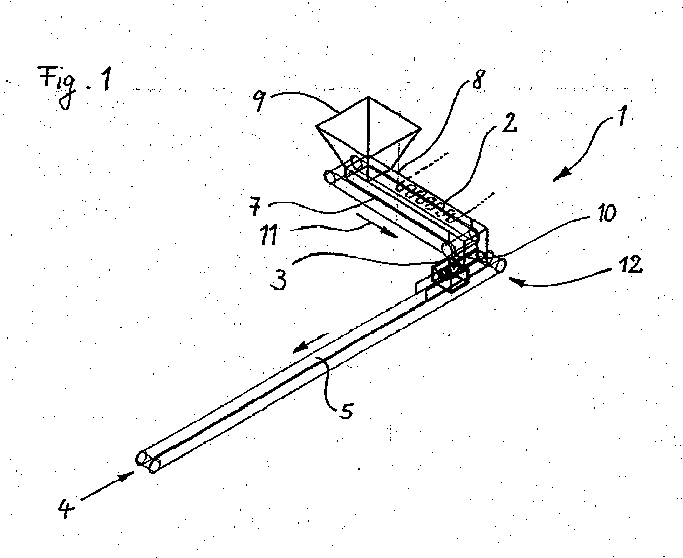

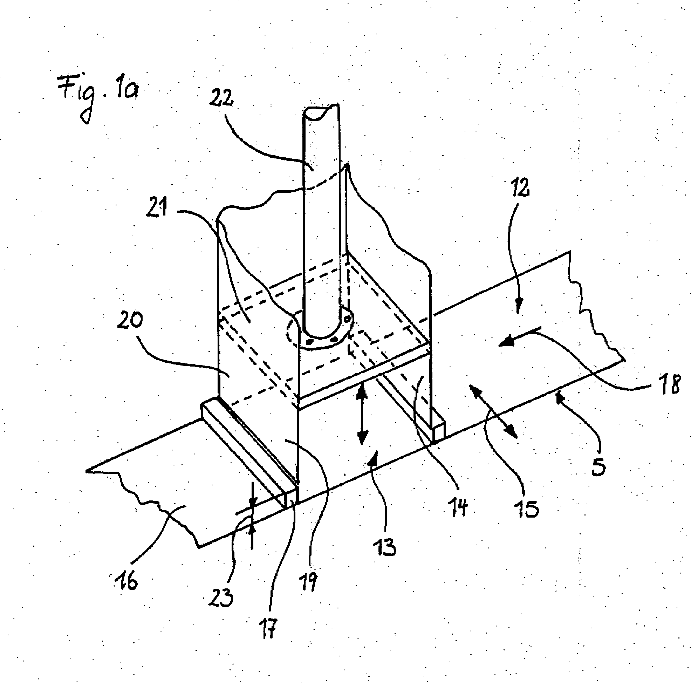

- Fig. 1: eine perspektivische Ansicht einer ersten Ausführungsform einer erfindungsgemäßen Vorrichtung,
- Fig. 1 a: eine perspektivische vergrößerte Ansicht der Komprimierungseinrichtung der Vorrichtung nach Fig. 1,
- Fig. 2: eine vergrößerte Darstellung der Zerkleinerungseinrichtung der Vorrichtung nach Fig. 1 und
- Fig. 3: ein Längsschnitt durch eine alternative Vorrichtung gemäß der Erfindung.

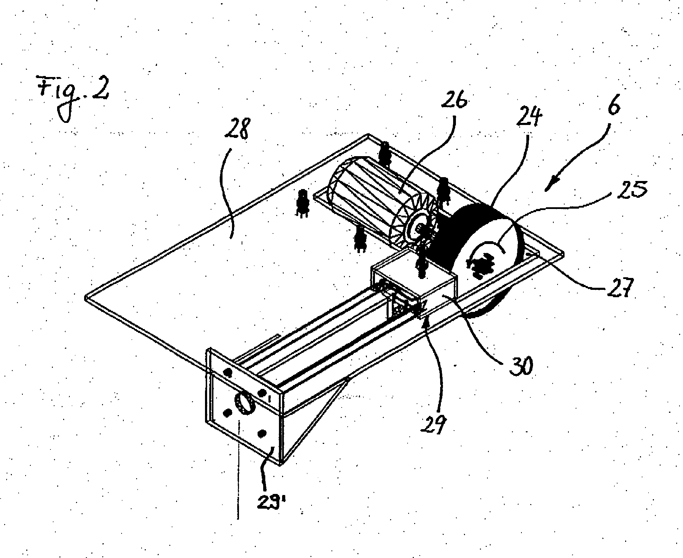

Eine in Figur 1 dargestellte Vorrichtung 1 zum Zerkleinern von kunststoffhaltigem Schüttgut weist eine durch punktierte Linien angedeutete Heizeinrichtung 2 zum Erwärmen des Schüttgutes, eine Komprimierungseinrichtung 3 (Details siehe Figur 1a) zum Komprimieren des Schüttguts und eine in Figur 1 nicht dargestellte, sich an das Ende 4 eines zweiten Förderbandes 5 anschließende Zerkleinerungseinrichtung 6 auf, die in Figur 2 näher dargestellt ist und später erläutert wird.

Die Vorrichtung 1 besitzt ein erstes Förderband 7, über dem ein geschlossener Kanal 8 ausgebildet ist, der aus zwei vertikal ausgerichteten Seitenwänden und einem horizontal ausgerichteten Deckblech besteht. Unterhalb des Deckblechs befindet sich innerhalb des Kanals 8 ein Förderquerschnitt für Schüttgut, das liegend auf der Förderoberfläche des Förderbandes 7 gefördert wird. Das Schüttgut gelangt durch einen Einfülltrichter 9 in den Kanal 8 und wird auf dem Weg in Richtung auf das Ende 10 des Förderbandes 7 mit Hilfe der Heizeinrichtung 2 kontinuierlich so weit erwärmt, dass das geförderte Stückgut zumindest oberflächlich bzw. bereichsweise angeschmolzen ist und einen leicht zusammenhängenden Verband bildet, dessen Volumen gegenüber dem Ursprungsvolumen des Schüttguts in seiner groben Körnung bereits kleiner ist, da das Material infolge der Plastifizierung in sich zusammengesunken ist und auf diesem Wege Lufteinschlüsse eliminiert wurden.

Die Heizeinrichtung 2 ist lediglich exemplarisch als elektrische Widerstandsheizung in Form von Heizspiralen dargestellt. Alternativ und/oder ergänzend sind auch alle anderen Arten von Heizeinrichtungen denkbar, wie insbesondere Heizungen mit Direktfeuerungen durch Gas, Öl oder andere flüssige, feste oder gasförmige Brennstoffe. Auch eine reine konvektive Heizung mittels über das geförderte Schüttgut geleitetem heißem Gas ist denkbar. Am in Förderrichtung (vgl. Pfeil 11) vorderen Ende des ersten Förderbandes 7 findet eine durch Schwerkraft induzierte Übergabe des dort zumindest im angeschmolzenen Zustand vorliegenden Förderstroms auf ein im rechten Winkel zu dem ersten Förderband 7 verlaufendes zweites Förderband 5 statt. Das Förderband 5 ist in vertikale Richtung um einen gewissen Betrag tiefer angeordnet als das mit dem Kanal 8 versehene Förderband 7.

Das Förderband 7 wird so lange betrieben und liefert im Bereich der Abwurflinie des Förderbandes so lange eine konstante Menge an angeschmolzenem Schüttgut in grober Körnung in einen Ansammlungsraum 12 oberhalb des Förderbandes 5, bis der Ansammlungsraum 12, der allseitig von Seitenwänden begrenzt wird, einen hinreichenden Füllungszustand erreicht hat.

Sodann stoppt das Förderband 7 und unterbricht somit den weiteren Abwurf von angeschmolzenem Schüttgut in grober Körnung. Aufgrund des angeschmolzenen Zustands lässt sich das derart vorliegenden und thermoplastische Anteile enthaltende zu zerkleinernde Kuriststöffmäferial zwar bleibend zu einer Platte komprimieren. Es handelt sich vor dem Komprimierungsvorgang aber nicht um einen derart fest zusammenhängenden Verbund, dass auch bei einer Förderunterbrechung des Förderbandes 7 eine Art Strang des Schüttguts von dem Förderband 7 in den Ansammlungsraum 12 hinunterhängen würde. Vielmehr findet schwerkraftbedingt ein Abtrennen des Stromes des Schüttguts im Bereich der Abwurflinie des Förderbandes 7 statt.

Figur 1 a zeigt in vergrößerter Darstellung einen Komprimierraum 13 der Komprimiereinrichtung 3, der sich oberhalb des Förderbandes 5 befindet. In Förderrichtung gesehen vor dem Komprimierraum 13 befindet sich der Ansammlungsraum 12, dessen Seitenwände in Figur 1a der Deutlichkeit halber nicht dargestellt sind. Eine Seitenwand 14 des Komprimierraums 13 ist zugleich auch Seitenwand des Ansammlungsraums 12. Um eine Überführung von dem Ansammlungsraum 12 in den Komprimierraum 13 zu ermöglichen, ist die

Seitenwand 14 in horizontale Richtung (siehe Doppelpfeil 15) verschiebbar und kann ganz aus dem Förderquerschnitt des Förderbandes 5 entfernt werden, wenn dieses bewegt wird.

Über die Förderoberfläche 16 des Förderbandes 5 vorstehend befinden sich eine Vielzahl von Leisten 17, die äquidistant über die gesamte Länge des Förderbandes 5 verteilt angeordnet sind. Der lichte Abstand zwischen zwei benachbarten Leisten 17 entspricht zum einen dem in horizontaler Richtung gemessenen Abstand der Seitenwand 14 von einer weiteren senkrecht zur Förderrichtung (Pfeil 18) des Förderbandes 5 ausgerichteten Seitenwand 19. Der Leistenabstand entspricht im Übrigen auch der Breite des ersten Förderbandes 7. Die seitliche Einfassung des Komprimierraumes 13 wird vervollständigt durch eine parallel zu Förderrichtung 18 ausgerichtete hintere Seitenwand 20 und eine vordere Seitenwand, die der Einfachheit halber in Figur 1 a nicht dargestellt ist.

Nachdem die Seitenwand 14 nach Art eines horizontal verfahrbaren Schotts zunächst den Weg für die Überführung der in dem Ansammlungsraum 12 angesammelten Menge des angesammelten Schüttguts freigemacht hat, findet sodann wieder eine Schließbewegung dieser Seitenwand 14 statt, um den Komprimierraum 13 vollständig zu umschließen.

Hiernach bewegt sich ein in vertikale Richtung bewegbarer Pressstempel 21 mit einer Kolbenstange 22. Das angeschmolzene Schüttgut wird dabei von seiner lockeren Schüttung in einen kompakten Zustand im Wesentlichen ohne Gaseinschlüsse überführt. Der Presshub des Pressstempels 21 ist dabei im Wesentlichen fest vorgegeben. Die Dicke der gepressten Platte entspricht im Wesentlichen der Höhe 23 der Leisten 17, so dass nach einem Zurückziehen des Pressstempels 21 und einem Weiterbewegen des Förderbandes 5 dieses zusammen mit den Leisten 17 und der dazwischen befindlichen gepressten Platte unter der feststehenden Seitenwand 19 hindurch bewegt werden kann.

Figur 2 zeigt in einer vergrößerten perspektivischen Darstellung die Zerkleinerungseinrichtung 6, die im Wesentlichen aus einer Raspelscheibe 24 bzw. - walze besteht, die an ihrem Umfang mit einer Vielzahl von zeichnerisch nicht dargestellten Schneidkanten versehen ist. Die Raspelscheibe rotiert in Richtung des Pfeils 25 und wird von einem Elektromotor 26 angetrieben. Die Raspelscheibe 24 befindet sich innerhalb eines Ausschnitts 27 in einem Zerkleinerungstisch 28, auf den die Platten, die das Ende 4 des Förderbandes 5 verlassen, förderbar sind. Die Zufuhr der Platten zu dem Zerkleinerungstisch 28 kann beispielsweise in eine Richtung parallel zu der Drehachse der Raspelscheibe 24 bzw. des Elektromotors 26 erfolgen.

Eine Vorschubeinrichtung 29 mit einem Anpresselement 30 sorgt dafür, dass die Platten kontinuierlich auf die Raspelscheibe 24 zu gefördert werden können. Dabei ist in Figur 2 das Anpresselement 30, das beispielsweise mit Hilfe eines nicht gezeigten Pneumatikzylinders, der an einem Flansch 29' befestigt werden kann, bewegt wird, in einer Stellung gezeigt, in der es sich in einem minimalen Abstand von der Raspelscheibe 24 befindet. Von dieser Stelle aus kann das Anpresselement 30 wieder in eine Ausgangsstellung zurückgefahren werden, in der eine neue Platte zwischen dem Anpresselement 30 und der Raspelscheibe 24 angeordnet werden kann, um den Zerkleinerungsprozess fortzusetzen.

Das in die kleinere Körnung überführte Schüttgut wird unterhalb des Zerkleinerungstisches 28, dessen Kante im Bereich der Kontaktzone zwischen der zu raspelnden Platte und der Raspelscheibe 24 als Gegenschneide wirkt, durch Ansaugung abgeführt und anschließend beispielsweise noch durch Sieben in verschieden Korngrößenbereiche getrennt.

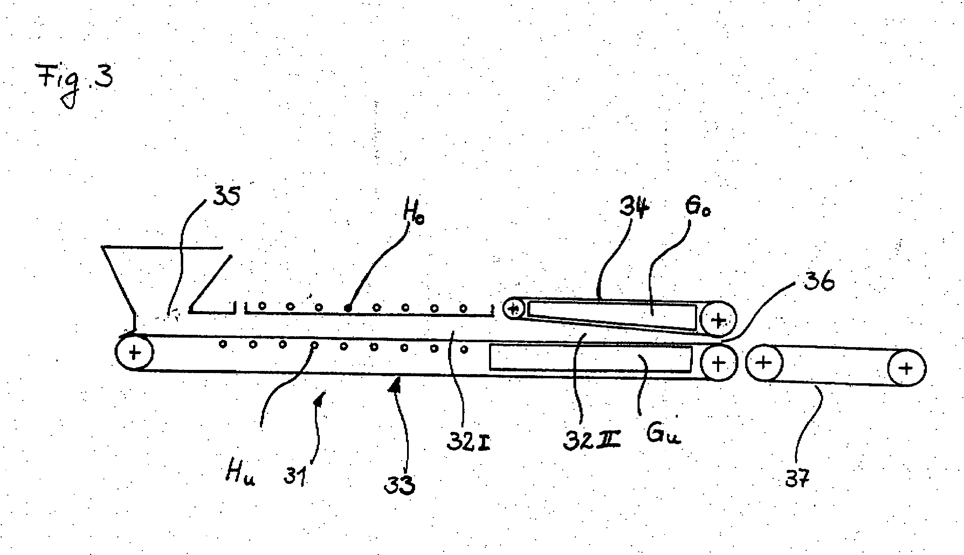

Figur 3 zeigt schließlich noch eine alternative Vorrichtung 31, bei der der Strom des Schüttguts zunächst in ein Spalt 32 I mit konstantem Querschnitt und anschließend in einem sich kontinuierlich verjüngenden Spalt 32 II, der zwischen einem unteren Förderband 33 und einem oberen Förderband 34 ausgebildet ist. Vor dem Anfang des Spaltes 32 I befindet sich ein Aufgabetrichter 30 für das in der groben Körnung aufzugebende Schüttgut. Beide Förderbänder 33 und 34 weisen hinter demjenigen Trum, der dem Spalt 32 II zugewandt ist, eine nicht näher dargestellte Abstützung in Form von Gleittischen Gᵤ, Gₒ auf, die ein Durchdrücken des jeweiligen Trums bei der Komprimierung des Schüttguts verhindert.

Bei dem Ausführungsbeispiel gemäß Figur 3 findet die Anschmelzung und Komprimierung des Schüttgutsstroms kontinuierlich statt. Über die gesamte Länge des Spaltes 32 l befinden sich zwei nicht näher dargestellte Heizeinrichtungen Hᵤ, Hₒ. Diese können mit einem Teil auch zwischen den beiden Trums des oberen Förderbandes 34 und mit einem anderen Teil zwischen den beiden Trums des unteren Förderbandes 33 angeordnet sein. Vorzugsweise werden hier elektrische Widerstandsheizungen verwendet, es ist aber auch die Anordnung von Heizkanälen für ein flüssiges Wärmeträgermedium innerhalb der Gleittische Gᵤ, Gₒ denkbar.

Aus dem Lieferquerschnitt 36 tritt im vorliegenden Fall ein kontinuierlicher Strang des verdichteten Schüttguts aus, das nachfolgend von einem weiteren Förderband 37 übernommen wird. Im Verlaufe des Förderbandes 37 findet eine Abkühlung des Strangs statt, wobei die Abkühlung aktiv gefördert werden kann durch Verwendung bestimmter Kühlmedien (kaltes Wasser, kalte Luft usw.). Am Ende der Kühlstrecke ist eine nicht näher dargestellte Zerkleinerungseinrichtung angeordnet, die den dort ankommenden abgekühlten Strang kontinuierlich in die kleinere Körnung zerschneidet. So kann beispielsweise eine Zerkleinerungseinrichtung wie in Figur 2 gezeigt, verwendet werden, mit der Maßgabe, dass die Vorschubeinrichtung 29 wegfallen kann und durch eine Führungseinrichtung für den Strang ersetzt wird, die eine horizontale sowie vertikale Ausweichbewegung desselben verhindert. Auch kann eine zusätzliche Fördereinrichtung in Form eines Reibrades mit gewissen Formschlusseiementen vorgesehen werden, um die nötige Anpresskraft an der Raspelscheibe zu erzeugen. Eine Führungseinrichtung zur Verhinderung von Ausweichbewegungen der Platte ist im Übrigen auch bei der Zerkleinerungseinrichtung 3 gemäß Figur 2 denkbar.

## Patentansprüche

1. Verfahren zum Zerkleinern von kunststoffhaltigem Schüttgut, dessen Korn hoch flexibel und dessen lockere Schüttung hoch kompressibel ist und das zunächst in einer groben Körnung vorliegt, anschließend erwärmt und komprimiert und danach in eine feinere Körnung überführt wird, **dadurch gekennzeichnet, dass** das Schüttgut, das zumindest zum Teil thermoplastischen Kunststoff enthält, vor und/oder während und/oder nach der Komprimierung derart zumindest angeschmolzen wird, dass es nach der Komprimierung und Erwärmung in Form eines endlosen Strangs oder einer Platte vorliegt, der bzw. die abgekühlt und in einem in sich zusammenhängenden Zustand mittels eines Schneidwerkzeugs in die feinere Körnung überführt wird, wobei die Dicke des Strangs bzw. der Platte zwischen 5 mm und 100 mm, vorzugsweise zwischen 10 mm und 50 mm, beträgt und wobei das Schüttgut in der feineren Körnung eine Korngröße im Bereich von 0,0 mm bis 20 mm, vorzugsweise von 0,0 mm bis 5,0 mm, weiter vorzugsweise von 0,0 bis 2,0 mm aufweist.

2. Verfahren nach Anspruch 1, **dadurch gekennzeichnet, dass** das Schüttgut während der Erwärmung mittels eines Förderbandes (7) gefördert und mittels einer oberhalb des Förderbandes (7) angeordneten Heizeinrichtung (2) erwärmt wird.

3. Verfahren nach Anspruch 1 oder 2, **dadurch gekennzeichnet, dass** die Heizzeit, während der das Schüttgut stillsteht, mindestens 20 Sekunden, vorzugsweise mindestens 30 Sekunden, beträgt.

4. Verfahren nach einem der Ansprüche 1 bis 3, **dadurch gekennzeichnet, dass** die Heiztemperatur zwischen 200° C und 250° C beträgt und dass das Schüttgut während des Erwärmens und/oder bereits zuvor komprimiert wird.

5. Verfahren nach einem der Ansprüche 1 bis 4, **dadurch gekennzeichnet, dass** das Schüttgut während der Komprimierung zwischen zwei Förderbändern (33, 34) oder zwei Walzen befördert wird, wobei der Förderquerschnitt sich in Förderrichtung bis auf einen Lieferquerschnitt (36) reduziert, dessen Höhe der Dicke des Strangs oder der Platte entspricht.

6. Verfahren nach einem der Ansprüche 1 bis 5, **dadurch gekennzeichnet, dass** ein kontinuierlich oder diskontinuierlich geförderter Strom des Stückguts vor der Komprimierung angeschmolzen und sodann in einen Komprimierbereich oder Komprimierraum (13) überführt und dort mittels eines Pressstempels (21) komprimiert wird.

7. Verfahren nach Anspruch 6, **dadurch gekennzeichnet, dass** der Strom des Stückguts vor der Überführung in den Komprimierraum (13) in einen Ansammlungsraum (12) überführt und die dort angesammelte Menge des angeschmolzenen Stückguts in den Komprimierraum (13) überführt wird, wobei sich derAnsammlungsraum (12) und der Komprimierraum (13) oberhalb eines Förderbandes (5) befinden, welches die beiden Räume (12, 13) nach unten hin begrenzt.

8. Verfahren nach einem der Ansprüche 1 bis 7, **dadurch gekennzeichnet, dass** der Strom des angeschmolzenen Stückguts durch die Schwerkraft von einem ersten Förderband (7) in den Ansammlungsraum (12) überführt wird, wobei die Bewegung des Förderbandes (7) zeitweise unterbrochen wird, um die Überführung des Stroms des Stückguts in den Ansammlungsraum (12) ebenfalls zu unterbrechen.

9. Vorrichtung (1.31) zum Zerkleinern von kunststoffhaltigem Schüttgut, dessen Korn hoch flexibel und dessen lockere Schüttung hoch kompressibel ist und das zunächst in einer groben Körnung vorliegt, wobei die Vorrichtung eine Heizeinrichtung (2) zum Erwärmen des Schüttguts, eine Komprimierungseinrichtung (3) zum Komprimieren des Schüttguts und eine Zerkleinerungseinrichtung (6) zur Überführung des Schüttguts in eine feinere Körnung aufweist, **dadurch gekennzeichnet, dass** mittels einer Heizeinrichtung (2) das Schüttgut, das zumindest zum Teil thermoplastischen Kunststoff enthält, vor und/oder während und/oder nach der Komprimierung zumindest derart anschmelzbar ist, dass es nach der Komprimierung und Erwärmung in Form eines endlosen Strangs oder einer Platte vorliegt, und dass mittels der Komprimierungseinrichtung (3) ein endloser Strang oder eine Platte des Schüttguts erzeugbar ist, wobei die Dicke des Strangs bzw. der Platte zwischen 5 mm und 100 mm, vorzugsweise zwischen 10 mm und 50 mm, beträgt und der mittels der Zerkleinerungseinrichtung (6) aus dem Strang bzw. der Platte jeweils im abgekühlten Zustand ein Stückgut mit einer feineren Korngröße erzeugbar ist, die zwischen 0,0 mm und 20 mm, vorzugsweise zwischen 0,0 mm und 5,0 mm, weiter vorzugsweise von 0 bis 2,0 mm beträgt.

10. Vorrichtung nach Anspruch 9, **dadurch gekennzeichnet, dass** das Schüttgut mittels einer Fördereinrichtung, vorzugsweise eines Förderbandes (7, 33), unterhalb der Heizeinrichtung (2) hindurch förderbar ist.

11. Vorrichtung nach Anspruch 9 oder 10, **dadurch gekennzeichnet, dass** die Komprimiereinrichtung (3) einen Pressstempel (21) aufweist, mittels dessen das angeschmolzene Schüttgut in einem Komprimierraum (13) komprimierbar ist, dessen Unterseite vorzugsweise von einem weiteren Förderband (5) gebildet ist und der Seitenwände (14, 19, 20) zur Verhinderung einer seitlichen Ausweichbewegung des zu komprimierenden Schüttguts besitzt.

12. Vorrichtung nach Anspruch 11, **dadurch gekennzeichnet, dass** das weitere Förderband (5) mit oberhalb der Förderfläche vorstehenden und in Längsrichtung des Förderbandes (5) verteilt äquidistant zueinander angeordneten Leisten (17) versehen ist, deren lichter Abstand zueinander der Länge einer in dem Komprimierraum (13) gepressten Platte und deren Höhe (23) der Dicke der gepressten Platte entspricht, wobei die Seitenwände (14, 19) des Komprimierraums (13) in einem solchen vertikalen Abstand oberhalb der Förderoberfläche des Förderbandes (5) abgeordnet sind, der geringfügig größer als die Höhe der Leisten (17) ist.

13. Vorrichtung nach einem der Ansprüche 9 bis 12, **dadurch gekennzeichnet, dass** die Zerkleinerungseinrichtung (6) aus einer Mehrzahl von axial aneinanderfügbaren, ringförmigen Raspelscheiben mit am Umfang vorstehenden Raspelzähnen besteht, wobei jede einzelne Raspelscheibe in Umfangsrichtung aus einer Mehrzahl aneinander gefügter Scheibensegmente besteht, die mit Bohrungen auf in axiale Richtung verlaufende, zueinander parallele Haltestangen aufschiebbar sind, welche wiederum zwischen zwei ein Paket der Raspelscheiben an beiden Enden begrenzenden Spannscheiben einspannbar sind.

14. Vorrichtung nach einem der Ansprüche 9 bis 13, **dadurch gekennzeichnet, dass** dem Schüttgut vor dem Erwärmen auf der Oberseite und/oder der Unterseite des zu bildenden Strangs oder der zu bildenden Platte ein Bahnmaterial, vorzugsweise ein Papier, zuführbar ist, wobei das Bahnmaterial, dessen Breite mindestens der Breite des zu bildenden Strangs entspricht, vor der Zuführung zu dem Strang oder zu der Platte von einer Rolle abwickelbar und nach der Trennung vom dem Strang oder von der Platte auf einer Rolle aufwickelbar ist.

15. Vorrichtung nach einem der Ansprüche 9 bis 14, **dadurch gekennzeichnet**, einen Vorkomprimierrraum, in dem das Schüttgut ohne Erwärmung vorkomprimierbar ist und einen sich in Förderrichtung anschließenden Komprimierraum, in dem das Schüttgut erwärmbar und komprimierbar ist und dessen quer zur Fördereinrichtung gemessene Breite größer als die quer zur Förderrichtung gemessene Breite des Vorkomprimierraums ist.

16. Vorrichtung nach den Ansprüchen 14 und 15, **dadurch gekennzeichnet, dass** das Bahnmaterial zwischen dem Vorkomprimierraum und dem Komprimierraum dem Strang oder der Platte zuführbar ist.
